(19) Europäisches Patentamt
European Patent Office
Office européen des brevets

(11) **EP 3 920 106 A1**

(12) **DEMANDE DE BREVET EUROPEEN**

(43) Date de publication:
**08.12.2021 Bulletin 2021/49**

(51) Int Cl.:
**G06N 3/08** *(2006.01)*          **G06K 9/62** *(2006.01)*
**G06N 3/04** *(2006.01)*

(21) Numéro de dépôt: **20305577.7**

(22) Date de dépôt: **02.06.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Bull SAS**
**78340 Les Clayes-sous-Bois (FR)**

(72) Inventeur: **LAUGROS, Alfred**
**38000 Grenoble (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(54) **PROCÉDÉ, PROGRAMME D'ORDINATEUR ET DISPOSITIF D ÉVALUATION DE LA ROBUSTESSE D'UN RÉSEAU DE NEURONES CONTRE DES PERTURBATIONS D'IMAGES**

(57) L'invention concerne un procédé (100) d'évaluation d'une robustesse d'un réseau de neurones (102) utilisé pour le traitement d'images, contre un groupe d'au moins deux perturbations différentes pouvant se trouver dans des images, ledit procédé (100) comprenant les étapes suivantes :
- détermination d'un score de robustesse ($SRI_i$), dit individuel, dudit réseau de neurones (102) pour chaque perturbation ($P_i$) dudit groupe ;
- détermination d'au moins un score de similarité ($SSI_{i,j}$), dit individuel, entre deux perturbations dudit groupe, et
- calcul d'un score de robustesse (SRG), dit global, dudit réseau de neurones (102) contre ledit groupe de perturbations en fonction :
- des scores de robustesse individuels ($SRI_i$) de toutes les perturbations (P, et
- d'au moins un score de similarité individuel ($SSI_{i,j}$) entre deux perturbations.

Elle concerne également un programme d'ordinateur et un dispositif mettant en œuvre un tel procédé.

Entrainement du réseau de neurones sur une base d'entrainement — 104

Génération d'une version de la base d'entrainement comprenant une perturbation — 110

Détermination et mémorisation d'un score de robustesse individuel $SRI_i$ par test du réseau de neurones entrainé sur la version de la base d'entrainement comprenant la perturbation. — 108, 112

Pour chaque perturbation $P_i$, détermination d'un score de similarité individuel $SSI_{i,j}$ entre cette perturbation et chacune des autres perturbations — 114

Pour chaque perturbation $P_i$, détermination d'un score de similarité global $SSG_i$ entre cette perturbation et l'ensemble des autres perturbations — 116

Pondération du score de robustesse individuel du réseau de neurones pour chaque perturbation — 118

Calcul du score de robustesse global du réseau de neurones — 120

**FIG. 1**

EP 3 920 106 A1

## Description

La présente invention concerne un procédé d'évaluation de la robustesse d'un réseau de neurones contre des perturbations dans les images. Elle concerne également un dispositif et un programme d'ordinateur configurés pour mettre une œuvre un tel procédé.

Le domaine de l'invention est le domaine des réseaux de neurones utilisés pour le traitement automatisé d'images.

## État de la technique

De nos jours, les réseaux de neurones sont largement utilisés dans le domaine du traitement automatisé d'images, principalement pour la classification automatisée d'images, ou pour la reconnaissance automatisée d'objets dans des images. Pour ce faire, un réseau de neurones est d'abord entrainé sur une base d'images, appelée base d'entrainement, puis performance est testée sur une base d'images, dite base de test ; cette dernière pouvant être partiellement ou totalement différente de la base d'entrainement.

Il est utile d'évaluer la robustesse d'un réseau de neurones à une perturbation présente dans une image. Cette robustesse est évaluée en comparant le score de performance obtenu avec le réseau de neurones pour des images ne comportant pas la perturbation, avec le score de performance obtenu avec ce même réseau de neurones avec ces mêmes images dans lesquelles est insérée ladite perturbation.

La robustesse globale d'un réseau de neurones à différentes perturbations et évaluée en prenant en compte la robustesse de ce réseau de neurones à chaque type de perturbations individuellement. Or, cette solution ne permet pas d'obtenir une évaluation précise de la robustesse globale d'un réseau de neurones contre un groupe de plusieurs perturbations.

Un but de la présente invention est de remédier à cet inconvénient.

Un autre but de la présente invention est de proposer un procédé permettant d'évaluer la robustesse globale d'un réseau de neurones contre un groupe de plusieurs perturbations, de manière plus précise.

## Exposé de l'invention

L'invention permet d'atteindre au moins l'un de ces buts par un procédé d'évaluation d'une robustesse d'un réseau de neurones utilisé pour le traitement d'images, contre un groupe d'au moins deux perturbations différentes pouvant se trouver dans des images, ledit procédé comprenant les étapes suivantes :

- détermination d'un score de robustesse, dit individuel, dudit réseau de neurones pour chaque perturbation dudit groupe ;
- détermination d'au moins un score de similarité, dit individuel, entre deux perturbations dudit groupe ; et
- calcul d'un score de robustesse, dit global, dudit réseau de neurones contre ledit groupe de perturbations en fonction :

  - des scores de robustesse individuels de toutes les perturbations, et
  - d'au moins un score de similarité individuel entre deux perturbations.

Ainsi, le procédé selon l'invention propose de prendre en compte les similarités entre les perturbations dans l'établissement du score de robustesse global. Par conséquent, le procédé selon l'invention permet déterminer le score de robustesse global d'un réseau de neurones de manière plus précise, comparée aux solutions actuelles qui, elles, ne prennent pas en compte les similarités entre les perturbations. Au contraire, les solutions actuelles accordent autant d'importance à toutes les perturbations lors de l'agrégation des scores de robustesse individuels pour établir le score de robustesse global. Or, lorsque deux perturbations sont très semblables, par exemple une rotation d'image ou un cisaillement de l'image, l'estimation de la robustesse globale va donner trop de poids à ces deux perturbations par rapport aux autres perturbations, ce que la présente invention permet d'éviter.

Dans le présent document par « image », on entend une image digitale ou une image numérique, et en particulier des données numériques représentant une image.

Dans le présent document par « perturbation » dans une image, on entend toute modification, ou dégradation, d'une image. De manière nullement limitative, une perturbation d'une image peut comprendre une modification, dans une partie ou la totalité de ladite image, de la forme de l'image, de l'orientation de l'image, d'une couleur dans l'image, d'une information contenue dans l'image par suppression ou par ajout d'une information parasite, etc.

Dans une version préférentielle, le procédé selon l'invention peut comprendre, pour chaque perturbation du groupe de perturbations, une détermination d'un score de similarité individuel entre ladite perturbation et chacune des autres perturbations dudit groupe. Dans ce cas, le calcul du score de robustesse global peut être réalisée en fonction de tous les scores de similarité individuels ainsi obtenus.

Autrement dit, lorsque le groupe de perturbations comprend N perturbations, ou N types de perturbations, alors l'étape de détermination peut comprendre une détermination de M scores de similarités avec

$$M = N*(N-1)/2.$$

Cette version préférentielle du procédé selon l'invention permet de déterminer un score de robustesse global plus précise, en prenant en compte toutes les similarités entre toutes les perturbations du groupe de perturbations, prises deux à deux.

Suivant un mode de réalisation nullement limitatif, la détermination d'un score de similarité individuel entre une première perturbation et une deuxième perturbation comprend les étapes suivantes, réalisée avec une base d'images :

- construction d'une première version de ladite base d'images dans laquelle chaque image comporte ladite première perturbation et d'une deuxième version de ladite base d'images dans laquelle chaque image comporte ladite deuxième perturbation ;
- obtention d'une première instance du réseau de neurones entrainée avec ladite première version de ladite base d'images, et d'une deuxième instance dudit réseau de neurones entrainée avec ladite deuxième version de ladite base d'images ;
- détermination d'un premier score de robustesse relatif en testant ladite première instance du réseau de neurones sur ladite deuxième version de ladite base d'images, et d'un deuxième score de robustesse relatif en testant ladite deuxième instance du réseau de neurones avec ladite première version de l'ensemble d'images ; et
- calcul du score de similarité individuel en fonction desdits premier et deuxième scores de robustesse relatifs.

Ce mode de réalisation permet de déterminer un score de similarité entre deux perturbations en prenant en compte les spécificités du réseau de neurones. Autrement dit, la similarité entre deux perturbations est déterminée en fonction du réseau de neurones considéré, ce qui est plus précis.

Suivant un mode de réalisation, le score de similarité individuel peut correspondre à une moyenne des premier et deuxième scores de robustesse relatifs.

Suivant un mode de réalisation alternatif, la similarité entre deux perturbations peut être déterminée indépendamment du réseau de neurones.

Par exemple, la similarité entre une première perturbation et une deuxième perturbation peut être déterminée par calcul d'une corrélation entre deux versions d'une même image, l'une des versions comportant uniquement la première perturbation et l'autre des versions comportant uniquement la deuxième perturbation.

Dans ce mode de réalisation alternatif, plusieurs valeurs de corrélation peuvent être calculées en prenant en compte plusieurs images. Le score de similarité entre les deux perturbations peut être calculée en fonction, et en particulier comme étant une moyenne, de toutes les valeurs de corrélations obtenues pour toutes les images.

Bien entendu d'autres techniques d'estimation, ou de calcul, de similarité peuvent être utilisées pour estimer la similarité entre deux perturbations.

Pour une perturbation, la détermination d'un score de robustesse individuel peut comprendre les étapes suivantes :

- entrainement du réseau de neurones avec une base d'images, dit d'entrainement ;
- construction d'une version modifiée de ladite base d'images dans laquelle chaque image comporte ladite perturbation ;
- détermination dudit score de robustesse individuel en testant ledit réseau de neurones entrainé sur ladite version modifiée de ladite base d'images.

Ainsi, le score de robustesse du réseau de neurones peut être déterminée individuellement pour chaque perturbation.

Préférentiellement, une même base d'entrainement peut être utilisée pour toutes les perturbations. Dans ce cas, il est construit autant de versions de ladite base d'entrainement qu'il y a de perturbations.

Suivant un mode de réalisation, l'étape de calcul du score de robustesse global peut comprendre, pour au moins une, en particulier chaque, perturbation, une pondération du score de robustesse individuel obtenu pour ladite perturbation avec le score de similarité de ladite perturbation avec au moins une, en particulier chacune, des autres perturbations.

Dans ce cas, c'est ce score de robustesse individuel pondéré qui est utilisé dans le calcul du score de robustesse global du réseau de neurones.

En particulier, pour au moins une, en particulier chaque perturbation, un score de similarité global, noté $SSG_i$, peut être déterminé, en fonction des scores de similarité individuels de cette perturbation avec chacune des autres perturbations. Ce score de similarité global peut ensuite être utilisé pour pondérer à la hausse ou à la baisse le score de robustesse individuel obtenu pour ladite perturbation.

Pour une perturbation, le score de similarité global peut être calculé selon toute relation mathématique prenant en compte tous les scores similarité individuels obtenu pour cette perturbation. Suivant un exemple de réalisation particulier, le score de similarité global $SSG_i$ pour une perturbation $P_i$ peut être une moyenne des scores de similarité individuels obtenus entre cette perturbation et chacune des autres perturbations, selon la relation suivante :

$$SSG_i = \frac{\sum_{j=1, j \neq i}^{N} SSI_{i,j}}{N - 1}$$

avec $SSI_{i,j}$ le score de similarité individuel obtenu entre la perturbation $P_i$ et la perturbation $P_j$.

La pondération du score de robustesse individuel par le(s) score(s) de similarité individuel(s), respectivement par le score de similarité global, peut être réalisée suivant toute relation mathématique prenant en compte ces scores. Suivant un exemple de réalisation particulier, la pondération peut consister en une multiplication dudit score de robustesse individuel par le(s)dit(s) score(s) de similarité individuel(s), respectivement par ledit score de similarité global, selon la relation suivante :

$$SRIP_i = SRI_i * SSG_i$$

Avec $SRIP_i$ le score de robustesse individuel prondéré pour la perturbation $P_i$,

Suivant un mode de réalisation non limitatif, le score de robustesse global peut être calculé comme étant la moyenne des scores de robustesse individuels pondérés.

Suivant un exemple de réalisation non limitatif, pour un groupe comprenant N perturbations, $P_1$-$P_N$, le score de robustesse global, noté SRG, du réseau de neurones peut être calculé par la formule suivante :

$$SRG = \frac{\sum_{i=1}^{N} SRIP_i}{N}$$

avec $SRIP_i$ le score de robustesse individuel pondéré pour la perturbation $P_i$.

Suivant un exemple de réalisation nullement limitatif, au moins une perturbation d'image peut être choisie parmi les perturbations suivantes :

- distorsion d'au moins une couleur(s) dans une image image ;
- rotation d'une image image ;
- cisaillement d'une image ;
- floutage d'une image ;
- bruitage d'une image.

Bien entendu, cette liste n'est nullement limitative.

Le réseau de neurones dont la robustesse est évaluée peut être tout type de réseau de neurones qu'il est possible d'utiliser pour le traitement d'image.

En particulier, le réseau de neurones peut être un réseau de neurones à propagation avant (« feed forward » en anglais), par exemple à perceptron simple ou à perceptron multicouche, un réseau de neurones récurrent, un réseau de neurones a résonnance, etc.

Suivant un autre aspect de la présente invention, il est proposé un programme d'ordinateur comprenant des instructions, qui lorsqu'elles sont exécutées par un appareil électronique et/ou informatique, mettent en œuvre le procédé selon l'invention.

Le programme d'ordinateur peut être codé avec tout type de langage informatique, tel que par exemple en C, C++, JAVA, Python, etc.

Le programme d'ordinateur peut être mémorisé dans un appareil informatique ou électronique.

Alternativement, le programme d'ordinateur peut être mémorisé sur un support lisible par un appareil informatique ou électronique, tel qu'une carte mémoire ou une clef USB par exemple. Dans ce cas, l'invention porte également sur le support mémorisant ledit programme informatique.

Suivant un autre aspect de la présente invention, il est proposé un dispositif d'évaluation d'une robustesse d'un réseau de neurones utilisé pour le traitement d'images, contre un groupe d'au moins deux perturbations différentes pouvant se trouver dans des images, ledit dispositif comprenant :

- un module de détermination d'un score de robustesse, dit individuel, dudit réseau de neurone pour chaque perturbation dudit groupe ;
- un module de détermination d'au moins un score de similarité entre deux perturbations dudit groupe, et
- un module de calcul d'un score de robustesse, dit global, dudit réseau de neurones contre ledit groupe de perturbations ;

configurés pour mette en œuvre toutes les étapes du procédé selon l'invention.

Au moins un de ces modules peut être formé par un programme informatique.

Au moins un de ces modules peut être formé par au moins un composant numérique, tel qu'une puce, un processeur, un calculateur, ou au moins un composant analogique, ou une combinaison d'au moins un composant numérique et d'au moins un composant analogique.

Au moins un de ces modules peut être séparé des autres modules.

Au moins deux de ces modules peuvent être combinés ou intégrés au sein d'un même module.

**Description des figures et modes de réalisation**

D'autres avantages et caractéristiques apparaîtront à l'examen de la description détaillée d'un mode de réalisation nullement limitatif, et des dessins annexés sur lesquels :

- la FIGURE 1 est une représentation schématique d'un exemple de réalisation non limitatif d'un procédé selon l'invention ;
- la FIGURE 2 est une représentation schématique d'un exemple de réalisation d'une étape d'estimation de similarité entre deux perturbations ; et
- la FIGURES 3 est une représentation schématique d'exemples de perturbations d'images pouvant être appliquées à une image.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

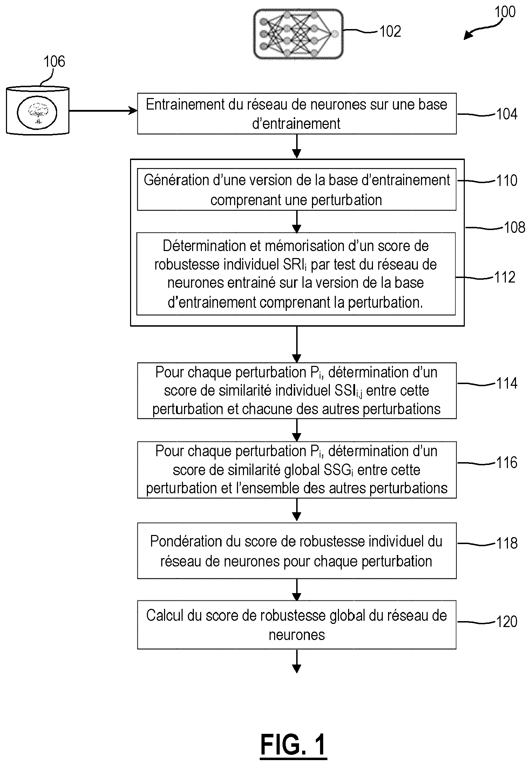

La FIGURE 1 est une représentation schématique d'un exemple de réalisation non limitatif d'un procédé selon l'invention.

Le procédé 100, représenté sur la FIGURE 1, peut être utilisé pour déterminer le score de robustesse global d'un réseau de neurones 102 par rapport un groupe de N perturbations différentes, ou N types différents de perturbations, notées $P_i$, avec $1 \leq i \leq N$.

Le procédé comprend une étape 104 d'entrainement du réseau de neurones 102 sur une base d'images 106, dite base d'entrainement, ne comportant aucune perturbation. Cette étape 104 fournit une instance entrainée du réseau de neurones 102, sur la base d'entrainement 106.

Le procédé 100 comprend une étape 108 pour déterminer un score de robustesse du réseau de neurones individuellement pour chaque perturbation.

Pour chaque perturbation, l'étape 108 comprend une étape 110 lors de laquelle la base d'entrainement est dupliquée, et la perturbation est insérée dans chaque image se trouvant dans la copie de la base d'entrainement. Ainsi, l'étape 110 fournit une version de la base d'entrainement dans laquelle chaque image comporte la perturbation.

Lors d'une étape 112, le réseau de neurones 102 entrainé sur la base de d'entrainement 106 est testé sur la version de la base d'entrainement obtenue à l'étape 110. Cette étape 112 fournit un score de robustesse individuel du réseau de neurones 102 par rapport à cette perturbation.

Cette étape 108 est réalisée pour chaque perturbation individuellement, par exemple à tour de rôle, et fournit un score de robustesse individuel, noté $SRI_i$, du réseau de neurones pour chaque perturbation $P_i$, individuellement et indépendamment des autres perturbations.

Le procédé 100 comprend en outre une étape 114 exécutée individuellement pour chaque perturbation $P_i$, et fournissant pour chaque perturbation $P_i$, un score de similarité individuel entre cette perturbation et chacune des autres perturbations. Pour un groupe de N perturbations, cette étape 114 fournit, pour chaque perturbation « i », (N-1) scores de similarité, notée $SSI_{i,j}$.

Lors d'une étape 116, un score de similarité global, noté $SSG_i$, est calculé pour chaque perturbation $P_i$ en fonction des scores de similarité individuels calculés entre cette perturbation Pi et chacune des autres perturbations. Pour une perturbation $P_i$, le score de similarité global $SSG_i$ peut par exemple être calculé comme étant la moyenne de tous les scores de similarités individuels $SSI_{i,j}$, avec $1 \leq i \leq N$ et $1 \leq j \leq N$, et $i \neq j$ :

$$SSG_i = \frac{\sum_1^N SSI_{i,j\ et\ i \neq j}}{N-1}$$

Ainsi, l'étape 116 fournit autant de scores de similarité global qu'il y a perturbations.

Le procédé 100 comprend en outre une étape 118, los de laquelle, pour chaque perturbation $P_i$, le score de robustesse individuel $SRI_i$ du réseau de neurones 102 pour cette perturbation $P_i$ est pondéré avec le score de similarité global $SSG_i$ obtenu pour cette perturbation $P_i$. Cette étape 118 fournit un score de robustesse individuel pondéré, noté $SRIP_i$, du réseau de neurones 102 pour chaque perturbation $P_i$.

Cette pondération peut être réalisée selon toute relation mathématique prenant en compte le score de robustesse individuel $SRI_i$ et le score de similarité global $SRG_i$.

Suivant un exemple de réalisation, cette pondération peut consister en une simple multiplication des deux scores, selon la relation :

$$SRIP_i = SRI_i * SSG_i$$

Ensuite, lors d'une étape 120 le score de robustesse global SRG du réseau de neurones 102 est calculé pour le groupe de perturbations en fonction de tous les scores de robustesse individuels pondérés obtenus à l'étape 118.

Ce calcul peut être réalisé selon toute relation mathématique prenant en compte tous les scores de robustesse individuels pondérés obtenus à l'étape 118.

Suivant un exemple de réalisation non limitatif, le score de robustesse global, noté SRG, du réseau de neurones 102 peut être calculé par la relation suivante :

$$SRG = \frac{\sum_{i=1}^N SRIP_i}{N}$$

avec $SRIP_i$ le score de robustesse individuel pondéré pour la perturbation $P_i$.

Bien entendu, le procédé selon l'invention n'est pas limité à l'exemple qui vient d'être décrit.

Par exemple, les relations mathématiques utilisées peuvent être différentes de celles indiquées.

De plus, les étapes 118 et 120 peuvent être combinées en une seule étape de calcul prenant en compte les scores de robustesse individuels et les scores de similarité individuels sans passer par le calcul des scores de similarité globaux.

Lors de l'étape 114, la similarité entre une première perturbation et une deuxième perturbation peut être estimée suivant toute technique connue.

Suivant un exemple de réalisation, cette similarité peut être déterminée en calculant un score de corrélation entre deux versions d'une base d'images, une première version comprenant des images comportant uniquement la première perturbation et une deuxième version comprenant ces mêmes images comportant uniquement la deuxième perturbation.

Une telle solution présente cependant l'inconvénient de ne pas prendre en compte les spécificités du réseau de neurones dans l'estimation de la similarité entre deux perturbations.

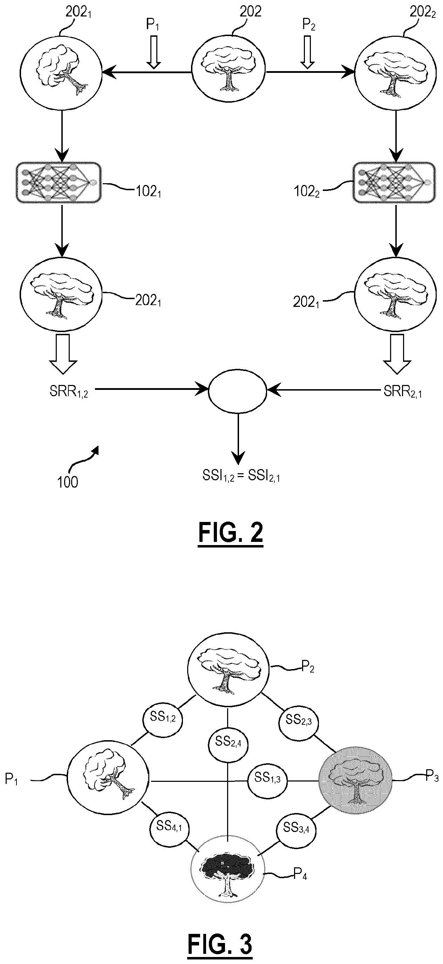

La FIGURE 2 est une représentation schématique d'un exemple de réalisation non limitatif d'une étape d'estimation de similarité entre deux perturbations.

L'étape 200, représentée sur la FIGURE 2, permet d'estimer la similarité entre une première perturbation $P_1$ et une deuxième perturbation $P_2$.

L'étape 200, représentée sur la FIGURE 2, peut correspondre à, ou être utilisé dans, l'étape 114 du procédé 100 de la FIGURE 1 pour estimer la similarité entre toutes les perturbations considérées deux à deux.

Dans l'exemple de la FIGURE 2, on suppose que la perturbation $P_1$ est une rotation d'image et la perturbation P2 est une déformation de cisaillement de cette même image.

L'étape 200 est réalisée en utilisant une base d'images 202, qui peut être par exemple la base d'entrainement 106, ou toute autre base d'images.

L'étape 200 comprend une génération d'une première version $202_1$ de la base 202 en générant une première copie de la base 202 et en insérant dans chaque image de cette copie la perturbation $P_1$, c'est-à-dire en appliquant une rotation à chaque image de cette première copie de la base 202. L'étape 200 comprend aussi une génération d'une deuxième version $202_2$ de la base 202 en générant une deuxième copie de la base 202 et en insérant dans chaque image de cette deuxième copie la perturbation $P_2$, c'est-à-dire en appliquant une rotation à chaque image de cette deuxième copie de la base 202.

Une première instance $102_1$ du réseau de neurones 102 est entrainée sur la première version $202_1$ de la base d'images 202 et une deuxième instance $102_2$ du réseau de neurones 102 est entrainée sur la deuxième version $202_2$ de la base d'images 202.

Puis, la première instance $102_1$ du réseau de neurones, entrainée sur la première version $202_1$ de la base d'image, est testée sur la deuxième version $202_2$ de la base d'images, pour obtenir un premier score de robustesse relatif, noté $SRR_{1,2}$. De manière similaire, la deuxième instance $102_2$ du réseau de neurones entrainée sur la deuxième version $202_2$ de la base d'images est testée sur la première version $202_1$ de la base d'images, pour obtenir un deuxième score de robustesse relatif, notée $SRR_{2,1}$.

En fonction de ces deux scores de robustesse relatifs ainsi obtenus, un score de similarité $SSI_{1,2}$ est calculé entre la première perturbation $P_1$ et la deuxième perturbation $P_2$. Ce calcul peut être réalisé selon toute relation mathématique prenant en compte ces scores de robustesse relatifs. Suivant un exemple de réalisation non limitatif, le score similarité individuel, noté $SSI_{1,2}$, entre la première perturbation P1 et la deuxième perturbation P2, peut être calculé comme étant la moyenne des scores de robustesse relatifs, selon la relation suivante :

$$SSI_{1,2} = SSI_{2,1} = \frac{SRR_{1,2} + SRR_{2,1}}{2}$$

Bien entendu, l'exemple donné à la FIGURE 2 n'est pas limitatif à deux perturbations.

La FIGURE 3 est une représentation schématique non limitatif de quatre perturbations d'images pouvant être prises en compte dans le procédé selon l'invention.

La perturbation P1 correspond à une rotation d'image.

La perturbation P2 correspond à une déformation de cisaillement d'une image.

La perturbation P3 correspond à l'ajout d'un bruit dans une image.

La perturbation P4 correspond à une altération d'au moins une couleur dans l'image.

Comme montré sur la FIGURE 2, un score de similarité est calculé entre toutes les perturbations $P_1$-$P_4$ prises deux à deux.

De plus, il est à noter que le score de similarité individuel $SSI_{i,j}$ d'une perturbation $P_i$ avec une perturbation $P_j$ est égale au score de similarité individuel $SSI_{j,i}$ de la perturbation $P_j$ avec la perturbation $P_i$.

Ainsi, pour un groupe de N perturbations, le procédé selon l'invention détermine [(N*(N-1))/2] score de similarité individuels, qui sont ensuite prise en compte dans le calcul du score de robustesse global.

Bien entendu, l'invention n'est pas limitée aux exemples détaillés ci-dessus.

## Revendications

1. Procédé (100) d'évaluation d'une robustesse d'un réseau de neurones (102) utilisé pour le traitement d'images, contre un groupe d'au moins deux perturbations différentes ($P_1$-$P_4$) pouvant se trouver dans des images, ledit procédé (100) comprenant les étapes suivantes :

   - détermination d'un score de robustesse ($SRI_i$), dit individuel, dudit réseau de neurones (102) pour chaque perturbation ($P_i$) dudit groupe ;
   - détermination d'au moins un score de similarité ($SSI_{i,j}$), dit individuel, entre deux perturbations dudit groupe, et

- calcul d'un score de robustesse (SRG), dit global, dudit réseau de neurones (102) contre ledit groupe de perturbations en fonction :

 - des scores de robustesse individuels (SRI$_i$) de toutes les perturbations (P, et
 - d'au moins un score de similarité individuel (SSI$_i$ j) entre deux perturbations.

2. Procédé (100) selon la revendication précédente, **caractérisé en ce qu'**il comprend, pour chaque perturbation (P$_1$-P$_4$) du groupe de perturbations, une détermination d'un score de similarité individuel (SSI$_{i,j}$) entre ladite perturbation et chacune des autres perturbations dudit groupe, le calcul du score de robustesse global (SRG) étant réalisée en fonction de tous les scores de similarité individuel (SSI$_{i,j}$).

3. Procédé (100) selon l'une quelconque des revendications précédentes, **caractérisé en ce que** la détermination d'un score de similarité individuel (SSI$_{1,2}$) entre une première perturbation (P$_1$) et une deuxième perturbation (P$_2$) comprend les étapes suivantes, réalisée avec une base d'images (202) :

 - construction d'une première version (202$_1$) de ladite base d'images (202) dans laquelle chaque image comporte ladite première perturbation (P$_1$) et d'une deuxième version (202$_2$) de ladite base d'images (202) dans laquelle chaque image comporte ladite deuxième perturbation (P$_2$) ;
 - obtention d'une première instance (102$_1$) du réseau de neurones (102) entrainée avec ladite première version (202$_1$) de ladite base d'images (202), et d'une deuxième instance (102$_2$) dudit réseau de neurones (102) entrainée avec ladite deuxième version (202$_2$) de ladite base d'images (102) ;
 - détermination d'un premier score de robustesse relatif (SRR$_{1,2}$) en testant ladite première instance (102$_1$) du réseau de neurones (102) sur ladite deuxième version (202$_2$) de ladite base d'images (202), et d'un deuxième score de robustesse relatif (SRR$_{2,1}$) en testant ladite deuxième instance (102$_2$) du réseau de neurones (102) avec ladite première version (202$_1$) de ladite base d'images (202) ; et
 - calcul du score de similarité individuel (SSI$_{1,2}$) en fonction desdits premier (SRR$_{1,2}$) et deuxième (SRR$_{2,1}$) scores de robustesse relatifs.

4. Procédé (100) selon la revendication précédente, **caractérisé en ce que** le score de similarité individuel (SSI$_{1,2}$) correspond à une moyenne des premier (SRR$_{1,2}$) et deuxième (SRR$_{2,1}$) scores de robustesse relatifs.

5. Procédé (100) selon l'une quelconque des revendications précédentes, **caractérisé en ce que**, pour une perturbation (P$_i$), la détermination d'un score de robustesse individuel (SRI$_i$) comprend les étapes suivantes :

 - entrainement du réseau de neurones (102) avec une base d'images, dite base d'entrainement ;
 - construction d'une version modifiée de ladite base d'images dans laquelle chaque image comporte ladite perturbation (P$_i$) ;
 - détermination dudit score de robustesse individuel (SRI$_i$) en testant ledit réseau de neurones entrainé (102) sur ladite version modifiée de la base d'images.

6. Procédé (100) selon l'une quelconque des revendications précédentes, **caractérisé en ce que** l'étape de calcul (120) du score de robustesse global (SRG) comprend, pour au moins une, en particulier chaque, perturbation (P$_i$), une pondération du score de robustesse individuel (SRI$_i$) obtenu pour ladite perturbation (P$_i$) avec le score de similarité individuel (SRI$_{i,j}$) de ladite perturbation (Pi) avec chacune des autres perturbations.

7. Procédé (100) selon la revendication précédente, **caractérisé en ce que** le score de robustesse global (SRG) est calculé comme étant la moyenne des scores de robustesse individuels pondérés (SRI$_i$).

8. Procédé (100) selon l'une quelconque des revendications précédentes, **caractérisé en ce qu'**au moins une perturbation d'image (P$_1$-P$_N$) est choisie parmi les perturbations suivantes :

 - distorsion d'au moins une couleur(s) dans une image ;
 - rotation (P$_1$) d'une image ;
 - cisaillement (P$_2$) d'une image ;
 - floutage d'une image ;
 - bruitage (P$_3$) d'une image.

9. Programme d'ordinateur comprenant des instructions, qui lorsqu'elles sont exécutées par un appareil électronique et/ou informatique, mettent en œuvre le procédé (100) selon l'une quelconque des revendications précédentes.

10. Dispositif d'évaluation d'une robustesse d'un réseau de neurones utilisé pour le traitement d'images, contre un groupe d'au moins deux perturbations (P$_1$-P$_4$) différentes pouvant se trouver dans des images, ledit dispositif comprenant :

 - un module de détermination d'un score de robustesse, dit individuel, dudit réseau de neurone (102) pour chaque perturbation (P$_1$-P$_4$) dudit

groupe ;
- un module de détermination d'au moins un score de similarité individuel ($SSI_{i,j}$) entre deux perturbations ($P_1$-$P_4$) dudit groupe, et
- un module de calcul d'un score de robustesse (SRG), dit global, dudit réseau de neurones (102) contre ledit groupe de perturbations ;

configurés pour mette en œuvre toutes les étapes du procédé (100) selon l'une quelconque des revendications 1 à 8.

Entrainement du réseau de neurones sur une base d'entrainement —104

Génération d'une version de la base d'entrainement comprenant une perturbation —110

Détermination et mémorisation d'un score de robustesse individuel $SRI_i$ par test du réseau de neurones entrainé sur la version de la base d'entrainement comprenant la perturbation. —112

—108

Pour chaque perturbation $P_i$, détermination d'un score de similarité individuel $SSI_{i,j}$ entre cette perturbation et chacune des autres perturbations —114

Pour chaque perturbation $P_i$, détermination d'un score de similarité global $SSG_i$ entre cette perturbation et l'ensemble des autres perturbations —116

Pondération du score de robustesse individuel du réseau de neurones pour chaque perturbation —118

Calcul du score de robustesse global du réseau de neurones —120

## FIG. 1

**FIG. 2**

**FIG. 3**

Europäisches
Patentamt

European
Patent Office

Office européen
des brevets

**RAPPORT DE RECHERCHE EUROPEENNE**

Numéro de la demande

EP 20 30 5577

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ALFRED LAUGROS ET AL: "Are Adversarial Robustness and Common Perturbation Robustness Independent Attributes ?", ARXIV.ORG, CORNELL UNIVERSITY LIBRARY, 201 OLIN LIBRARY CORNELL UNIVERSITY ITHACA, NY 14853, 4 septembre 2019 (2019-09-04), XP081485484, * Sections 2.1 et 2.4. Equations (5) et (6).; figure 1 *<br><br>----- | 1-10 | INV.<br>G06N3/08<br>G06K9/62<br><br>ADD.<br>G06N3/04 |
|  |  |  | **DOMAINES TECHNIQUES RECHERCHES (IPC)**<br><br>G06N<br>G06K |

Le présent rapport a été établi pour toutes les revendications

| Lieu de la recherche | Date d'achèvement de la recherche | Examinateur |
|---|---|---|
| La Haye | 23 novembre 2020 | Szymanski, Francois |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

................................................................

& : membre de la même famille, document correspondant

EPO FORM 1503 03.82 (P04C02)